(19) Europäisches Patentamt / European Patent Office / Office européen des brevets

(11) **EP 4 066 453 B1**

(12) **FASCICULE DE BREVET EUROPEEN**

(45) Date de publication et mention
de la délivrance du brevet:
**08.01.2025 Bulletin 2025/02**

(21) Numéro de dépôt: **20812029.5**

(22) Date de dépôt: **26.11.2020**

(51) Classification Internationale des Brevets (IPC):
*H04L 12/46* (2006.01)    *H04L 12/40* (2006.01)
*G06F 12/02* (2006.01)

(52) Classification Coopérative des Brevets (CPC):
**H04L 12/4625; G06F 12/0284; H04L 12/40169;**
G06F 2212/154; G06F 2212/173; G06F 2212/174;
H04L 2012/40273

(86) Numéro de dépôt international:
**PCT/EP2020/083456**

(87) Numéro de publication internationale:
**WO 2021/105262 (03.06.2021 Gazette 2021/22)**

(54) **SYSTÈME DE GESTION DES DONNÉES PARTAGÉES**

GETEILTES DATENVERWALTUNGSSYSTEM

SHARED DATA MANAGEMENT SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.11.2019 FR 1913280**

(43) Date de publication de la demande:
**05.10.2022 Bulletin 2022/40**

(73) Titulaire: **Commissariat à l'Energie Atomique et
aux Energies
Alternatives
75015 Paris (FR)**

(72) Inventeurs:
• **KRICHENE, Hana
91191 GIF SUR YVETTE (FR)**
• **DUBRULLE, Paul
75014 PARIS (FR)**

(74) Mandataire: **Atout PI Laplace
Immeuble Up On
25 Boulevard Romain Rolland
CS 40072
75685 Paris Cedex 14 (FR)**

(56) Documents cités:
EP-A1- 1 177 658      EP-A2- 1 034 982
EP-B1- 1 177 658      US-A1- 2014 334 300

**Description**

Domaine technique

L'invention concerne généralement les systèmes distribués et en particulier un système et un procédé de gestion de données partagées.

Les systèmes embarqués, tels que les véhicules, utilisent généralement des systèmes distribués temps réel pour gérer les échanges de données entre différentes entités de calcul du système, en utilisant des protocoles de communication différents, comme décrit par exemple dans US 2014/334300 A1. De tels systèmes distribués sont prévus pour fournir des réponses déterministes à des transferts de données dans des fenêtres temporelles réservées par des applications embarquées dans le système distribué.

Par exemple, l'environnement de calcul dans les véhicules modernes est composé de plusieurs unités de contrôle distribuées, intégrées et interconnectées au moyen de plusieurs supports de communication utilisant différents protocoles de communication. De tels protocoles sont très dépendants du moyen de transmission utilisé et de l'application logicielle visée. Par ailleurs, de tels systèmes embarqués exécutent de nombreuses applications, comme par exemple des applications de conduite automatique (AD) dans les véhicules modernes, qui génèrent de nouveaux besoins et de nouveaux défis relatifs au transport et au traitement de données provenant des capteur (caméras vidéo, radars, lidars...) agencés sur le système pour mesurer des grandeurs utilisées par les applications.

Un tel environnement de calcul est considéré comme un environnement à criticité mixte, c'est-à-dire qu'il comprend des entités devant respecter un comportement attendu considéré comme critique et d'autres entités ne présentant pas de garantie de comportement. Une criticité mixte n'assure pas une maitrise temporelle comme cela est requis par les systèmes temps réel (RT). Une maîtrise temporelle est assurée par un système distribué lorsque le système fournit des réponses correctes aux moments appropriés définis par les fonctionnalités critiques du système. Dans un environnement de calcul distribué, des mémoires distribuées sont généralement utilisées. Cependant, les accès en lecture ou en écriture à de telles mémoires sont difficiles à gérer dans les systèmes très étendus. Les mémoires distribuées existantes assurent en outre un accès direct entre les entités de calculs qui leurs sont connectées. Cependant, de tels accès ne sécurisent pas les échanges de données, ce qui est un enjeu majeur dans les systèmes embarqués modernes (comme par exemple les véhicules électriques).

Un système distribué temps réel (RT) nécessite notamment une garantie de réponses en temps réel borné, une extensibilité facile de l'environnement de calcul, une hétérogénéité des supports de calcul et de leurs protocoles de communication, et un accès partagé aux ressources et aux données. Par ailleurs, un système distribué temps réel (RT) doit garantir un coût de communication minimal tout en optimisant l'occupation de la bande passante et en réduisant les délais de communication.

Une solution de gestion de données dans un environnement de calcul distribué a été proposée dans la demande de brevet WO 05950 qui propose une méthode de partage de données stockées dans une base de données. Selon cette approche, différents programmes peuvent accéder à la base de données. Cependant, une telle solution ne permet pas de transmettre, de manière autonome, paramétrable et déterministe, toutes les données issues des différents flux d'un environnement. Par ailleurs, cette solution nécessite le traitement de nombreuses interruptions lors de l'exécution des programmes, ce qui empêche d'obtenir des réponses déterministes.

Une autre solution a été proposée dans la demande de brevet WO032750. WO032750 propose un système de communication RT basée sur une structure d'accueil permettant une distribution des données entre deux ou plusieurs équipements construits avec des architectures hétérogènes. WO032750 utilise en outre une passerelle réseau permettant d'interfacer des réseaux différents dont le fonctionnement est cadencé par le temps. Cependant cette solution ne permet pas le traitement de trames de différents protocoles de communication, ni l'optimisation de la bande passante. Un déterminisme n'est assuré qu'au niveau des requêtes et non dans les chemins de transfert de données de bout en bout dans tout le système.

Dans une autre approche encore, décrite dans la demande de brevet WO 021974, un procédé de transmission de données temps réel de systèmes industriels basés sur Ethernet implémenté a été proposé. Un tel procédé est constitué d'un nœud maître et d'un ensemble de nœuds esclaves dans lequel un nœud peut modifier le contenu d'une trame avant sa réémission vers un autre nœud, en s'appuyant sur une connaissance à priori de la structuration des trames. Cependant, le procédé ne s'appuie pas sur une mémoire centrale pour stocker les données à utiliser pour construire de nouvelles trames. Par suite, une trame peut uniquement être modifiée sans engendrer un désassemblage des données et une reconstruction dans d'autres trames.

Il est également connu de WO 145382 d'utiliser un composant électronique capable d'évoluer dans un environnement distribué pour jouer le rôle de passerelle entre différents éléments de l'environnement utilisant des protocoles de communication différents, tout en fournissant des réponses déterministes à des requêtes en provenance de ces éléments. Cependant, dans cette approche, le transfert des trames est uniquement lié à des requêtes déclenchées par des consommateurs de données.

Il existe ainsi un besoin pour un système et un procédé de gestion temps réel de données partagées améliorés, apte à être utilisé dans un environnement de calcul distribué.

Définition générale de l'invention

L'invention est définie par les revendications indépendantes. Les revendications dépendantes se rapportent à des modes de réalisation particuliers.

L'invention vient améliorer la situation. A cet effet, il est proposé un système de gestion de données partagées configuré pour recevoir des trames comprenant des données d'un ou plusieurs dispositifs producteurs et pour transmettre des trames reconstruites à destination de un ou plusieurs dispositifs consommateurs, un dispositif producteur et un dispositif consommateur étant connectés au système de gestion de données partagées par l'intermédiaire d'un réseau de communication en utilisant un protocole de communication. Le système de gestion de données partagées comprend un système de mémoires ayant une ou plusieurs mémoires. Avantageusement, le système de gestion de données partagées comprend un contrôleur central configuré pour stocker certaines au moins des données encapsulées dans une trame reçue d'un dispositif producteur dans une zone mémoire cible du système de mémoires, le contrôleur central étant configuré pour calculer, pour chaque donnée à stocker, l'adresse de la mémoire cible à partir d'un indice associé à la donnée dans la trame reçue.

Dans un mode de réalisation, un ou plusieurs échantillons d'une même donnée sont reçus à différents instants. Le contrôleur central peut être alors configuré en outre pour calculer un bit de validité pour la donnée reçue en fonction d'une date d'expiration associée à la donnée, le bit de validité étant mis à une valeur de validité si aucun échantillon précédant de la donnée, associé à un autre indice n'est stocké dans le système de mémoires.

Avantageusement, le contrôleur central peut détecter un retard de réception de données encapsulées dans une trame reçue en comparant la date d'expiration de la donnée à la date de réception de la donnée.

Dans un mode de réalisation, la date d'expiration peut être calculée à partir de l'indice de la donnée.

Dans une forme de réalisation, le système de gestion de données partagées peut comprendre au moins une structure de données de configuration stockant les informations de configuration associées aux trames, aux données, aux dispositifs producteurs et aux dispositifs consommateurs connectés au système de gestion de données partagées par l'intermédiaire du réseau de communication, le contrôleur central utilisant en outre des informations stockées dans les structures de données de configuration pour déterminer l'adresse de la mémoire cible.

En particulier, au moins une structure de données de configuration peut comprendre :

- Une table de trames comprenant une liste des trames à envoyer sur le réseau de communication par le système de gestion de données partagées à destination de dispositifs consommateurs ; et/ou

- Une table d'envoi comprenant une liste des données à encapsuler dans les trames à envoyer sur le réseau de communication, chaque donnée étant identifiée par au moins un identifiant de donnée ; et/ou

- Une table de contrôle comprenant les informations relatives à chaque donnée circulant dans le réseau de communication, le ou les identifiants de donnée stockés dans la table d'envoi représentant l'adresse d'accès à la table de contrôle.

Dans un mode de réalisation, la table de trames peut comprendre pour chaque trame à émettre:

- la date d'émission de la trame ; et

- la date limite de réception de la trame représentant la date à laquelle la trame doit être reçue au plus tard.

La table d'envoi peut comprendre pour chaque donnée de la liste :

- une paire d'identifiants; et

- un indice de donnée représentant l'adresse de la donnée relative à un dispositif producteur.

Dans un mode de réalisation, la table de contrôle peut comprendre :

- un paramètre de décalage de l'adresse de la donnée dans le système de mémoires ; et

- la taille de la donnée.

Avantageusement, le contrôleur central peut être configuré pour calculer l'adresse mémoire cible d'une donnée en utilisant en outre le décalage d'adresse et la taille de la donnée stockée dans la table de contrôle.

L'adresse mémoire cible d'une donnée peut être égale à la somme du décalage d'adresse et de la taille de la donnée stockées dans la table de contrôle.

Dans un mode de réalisation, le contrôleur central peut être configuré pour construire les trames à émettre en regroupant les données dans les trames en fonction du dispositif consommateur cible et de la date d'émission associée à la trame dans les structures de données de configuration.

Le système de gestion de données partagées peut comprendre une pluralité de contrôleurs mémoires, faisant l'interface entre le système de mémoires et le contrôleur central, et un ou plusieurs contrôleurs de protocoles, faisant l'interface entre le contrôleur central et les dispositifs producteurs et consommateurs, chaque contrôleur de protocole étant spécifique à un protocole donné.

Dans un mode de réalisation, le système de mémoires peut comprendre au moins une zone de mémoire dédiée associée à un dispositif producteur donnée, les données stockées dans une zone mémoire donnée comprenant les données produites par le dispositif producteur associé à ladite zone mémoire dédiée.

Il est en outre proposé un procédé de gestion de données partagées mis en œuvre dans un système de gestion de données partagées pour recevoir des trames comprenant des données d'un ou plusieurs dispositifs producteurs et pour transmettre des trames reconstruites à destination d'un ou plusieurs dispositifs consommateurs, un dispositif producteur et un dispositif consommateur étant connectés au système de gestion de données partagées par l'intermédiaire d'un réseau de communication en utilisant un protocole de communication, le système de gestion de données partagées comprenant un système de mémoires comprenant une ou plusieurs mémoires. Le procédé comprend avantageusement une étape de stockage de certaines au moins des données encapsulées dans une trame reçue d'un dispositif producteur dans une zone mémoire cible du système de mémoires, le procédé comprenant en outre une étape consistant à calculer pour chaque donnée à stocker l'adresse de la mémoire cible à partir d'un indice associé à la donnée dans la trame reçue.

Les modes de réalisation de l'invention permettent ainsi une gestion temps réel de données partagées dans un environnement de calcul distribué utilisant des protocoles de communication différents tout en fournissant des réponses déterministes à des messages basés sur des évènements de transferts de données.

Ils fournissent en outre une solution pouvant être basée sur des scénarios d'échange préalablement configurés tout en respectant les fenêtres temporelles fournies par les dispositifs producteurs de données et/ou le réseau de communication, tout en assurant une optimisation de l'utilisation de la bande passante.

Les modes de réalisation de l'invention permettent en outre la cohabitation de communications traditionnelles basées sur des messages cycliques (tels que par exemple LIN, CAN/CAN-FD et FlexRay) avec des communications orientées services constituées de monodiffusions de messages basées sur des événements et des contraintes de temps imposées pour garantir la validité des données produites, telles que les communications des réseaux basés sur IP (par exemple, Ethernet).

Brève Description des Figures

D'autres caractéristiques, détails et avantages de l'invention ressortiront à la lecture de la description faite en référence aux dessins annexés donnés à titre d'exemple et qui représentent, respectivement :

[Fig. 1] La figure 1 représente un système de gestion des données partagées selon certains modes de réalisation ;

[Fig. 2] La figure 2 illustre la structure d'un message reçu ou envoyé par un système de gestion des données partagées, selon des modes de réalisation de l'invention ;

[Fig. 3] La figure 3 représente un exemple de table de trames, selon un mode de réalisation ;

[Fig. 4] La figure 4 représente un exemple de table d'envoi, selon un mode de réalisation ;

[Fig. 5] La figure 5 représente un exemple de table de contrôle, selon un mode de réalisation ;

[Fig. 6] La figure 6 représente un exemple d'implémentation du système de gestion des données partagées selon certains modes de réalisation ;

[Fig. 7] La figure 7 est un organigramme représentant le procédé de réception de données, selon certains modes de réalisation ; et

[Fig. 8] La figure 8 est un organigramme représentant le procédé d'envoi de données stockées dans le système de mémoires, selon certains modes de réalisation.

Description détaillée de la demande

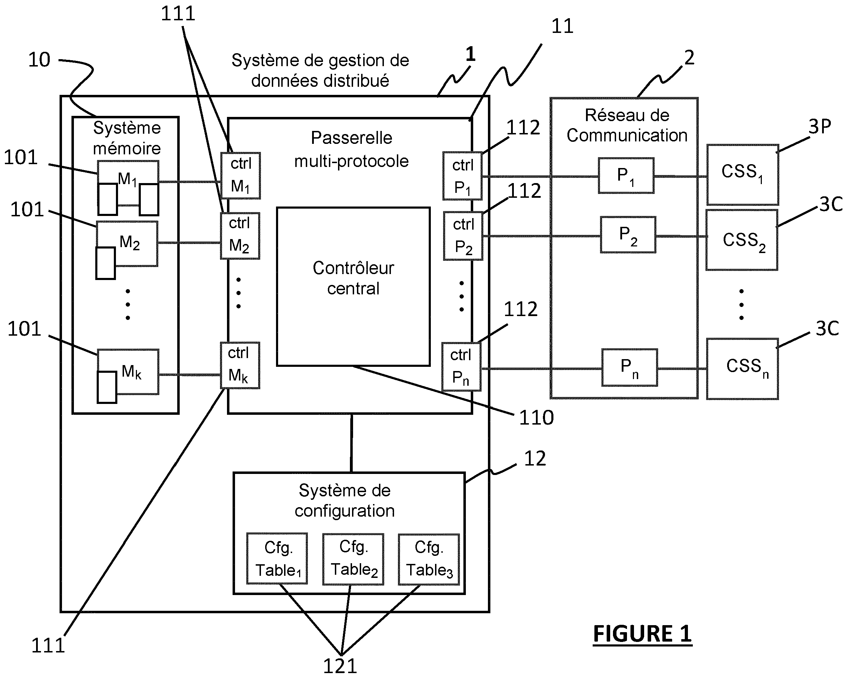

La Figure 1 représente un exemple d'environnement opérationnel 100 d'un système de gestion de données partagées 1, selon certains modes de réalisation.

Le système de gestion des données partagées 1, encore appelé ci-après système DSM (acronyme pour l'expression correspondante en langue anglo-saxonne « Data Sharing Management» signifiant Gestion Partagée de Données).

Le système de gestion des données partagées 1 comprend un système 10 de mémoires comprenant une pluralité de mémoires séparées qui forment un espace d'adresses partagées sur un plan logique. L'espace d'adresse est partagé, c'est à dire qu'une même adresse physique sur deux processeurs distincts pointe vers le même emplacement en mémoire.

Le système DSM 1 comprend en outre une passerelle multi-protocoles 11 comprenant un contrôleur central 110 configuré pour recevoir des données d'un ou plusieurs dispositifs 3P producteurs de données externes via un réseau de communication 2 ou pour envoyer des données stockées dans le système de mémoires 10 vers un ou plusieurs dispositifs 3C consommateurs de données. Le contrôleur central 110 est en outre configuré pour extraire les données reçues dans un message en provenance d'un dispositif producteur de données 3P et, pour chaque donnée extraite, de déterminer un bit de validité avant de stocker la donnée extraite en association avec le bit de validité ainsi déterminé dans une mémoire 101 sélectionnée au préalable.

Le système DSM 1 peut comprendre en outre un système de configuration 12 configuré pour stocker des informations de configuration associées aux données stockées dans les mémoires 101. Avantageusement, le contrôleur central 110 peut être configuré pour déterminer la mémoire 101 à sélectionner pour le stockage d'une donnée reçue à partir des informations de configuration associées aux données stockées dans le système de mémoires 10. Le système de configuration peut stocker les informations de configuration dans toute structure de données 121 adaptée, telle qu'une table de configuration. Les informations de configurations peuvent comprendre divers paramètres associés aux données stockées dans le système de mémoires 10, tels que la taille ou la criticité des données. La suite de la description sera faite en référence à des structures de données de configuration 121 de type tables de configuration, à titre d'exemple non limitatif.

De telles structures de données de configuration 121 peuvent stocker plus généralement tout paramètre fournissant une connaissance préalable sur la structure de la charge applicative des trames de données reçues des dispositifs producteurs 3Pet des besoins en termes de données de consommation requises par chaque sous-système consommateur 3C connecté au DSM 1 via le réseau de communication 2.

La passerelle multi-protocoles 11 peut être utilisée par différents éléments de l'environnement de calcul 100, quel que soit le protocole de communication utilisé, tout en fournissant des réponses déterministes à des transferts de données définies dans des tables de configurations.

Avantageusement, le fonctionnement du système DSM 1 ne dépend pas de la réception de requêtes de transmission de données en provenance de dispositifs producteurs 3P pour déclencher l'envoi de données aux dispositifs consommateurs 3C. Le système DSM 1 selon les modes de réalisation de l'invention utilise des informations de configuration décrivant des scénarios de transmission de données définis dans les tables de configuration 121. Dans un mode de réalisation, les tables de configuration 121 peuvent être générées automatiquement par analyse outillée d'un modèle de calcul, comme décrit par exemple dans P. Dubrulle, C. Gaston, N. Kosmatov, A. Lapitre, and S. Louise. «A Dataflow Model with Frequency Arithmetic.» 22nd International Conference on Fundamental Approaches to Software Engineering (FASE). Cham: Springer, 2019. Un tel modèle de calcul est une extension du format de modèle de Flot de Données Synchrone (« Synchronous Data Flow » ou SDF) appelé polygraphe. Par exemple, dans une application de l'invention à un système de calcul embarqué dans un véhicule, le modèle de calcul peut s'appuyer sur le standard AUTOSAR. Un tel mode de fonctionnement basé sur la connaissance préalable de scénarios de transmission de données permet de sécuriser les transferts de données multi-protocoles tout en garantissant une faible latence et une large bande passante (l'exploitation de la bande passante disponible est ainsi optimisée).

La passerelle multi-protocoles 11 peut comprendre un ou plusieurs contrôleurs de protocoles 112 (dénommés « Ctrl $P_i$ » sur la figure 1) configurés pour former une interface avec le réseau de communication 2.

La passerelle multi-protocoles 11 peut en outre comprendre un ou plusieurs contrôleurs mémoire 111 (dénommés « Ctrl $M_i$ » sur la figure 1) configuré(s) pour former une interface avec le système de mémoires 10.

Le contrôleur central 110 est agencé pour orchestrer les échanges de données entre les différents éléments internes du système DSM 1 tels que le système de mémoires 10, les tables de configuration 121. Le contrôleur central 110 peut utiliser un format de données commun à tous les éléments du DSM 1. Le contrôleur central 110 peut en outre utiliser un ordonnancement des échanges prédéfini dans le système de configuration 12.

Le système DSM 1 peut comprendre une unité d'horodatage 14 (non représentée) configurée pour associer à chaque donnée reçue d'un producteur une date de réception représentant la date à laquelle la donnée a été reçue par le système DSM 1. Dans un mode de réalisation, l'unité d'horodatage peut être configurée pour calculer une date de réception pour la donnée à partir d'un indice correspondant à la donnée (plusieurs échantillons d'une même donnée peuvent être émis par les dispositifs producteurs, chaque échantillon étant associé à un indice correspondant à un instant d'envoi, les indices étant incrémentés en fonction de la date d'envoi de l'échantillon. Ainsi un premier échantillon d'une donnée d'indice inférieur à l'indice d'un deuxième échantillon de la même donnée correspondra à un instant de transmission antérieur à l'instant de transmission du deuxième échantillon. Cependant, il peut arriver qu'un échantillon d'indice inférieur arrive après un échantillon d'indice supérieur, par exemple en cas de perte de paquets. Il peut également arriver que deux échantillons d'une même donnée soient reçus à des instants consécutifs tandis que les indices de ces échantillons ne sont pas successifs (la valeur absolue de la différence entre les deux indices est strictement supérieure à 1), en cas de perte de message.

De tels indices associés aux données reçues peuvent être utilisés pour déterminer la durée de validité de chaque donnée reçue depuis un consommateur 3C ainsi que la péremption d'une donnée.

Dans un mode de réalisation, le contrôle de la validité d'une donnée (donnée non périmée) peut être effectué à l'échelle de la trame. Selon un tel mode de réalisation, il est supposé que les dispositifs producteurs 3P envoyant les trames de données (ou messages de données) ne mettent à disposition que des données valides, après avoir effectué un premier filtrage des données à transmettre dans le réseau de communication 2.

Le réseau de communication 2 peut inclure un ou plusieurs réseaux privés et/ou publics (p. ex. Internet) qui permettent l'échange de données, tels qu'Internet, un réseau de zone locale (LAN), un réseau de zone étendue (WAN), un réseau cellulaire voix/données, une ou plusieurs connexions par bus à haute vitesse et/ou d'autres types de réseaux de communication de ce genre. Le réseau 2 peut utiliser des protocoles de communication tels que 4G, Ethernet, 802.11, TCP/IP (Protocole de contrôle de transmission/Protocole Internet), HTTP (Protocole de transport hypertexte), FTP (Protocole de transfert de fichier), etc.

Le test de validité d'une donnée reçue dans une trame depuis un dispositif producteur 3P peut être réalisé à l'échelle de la trame en utilisant une date de réception globale. Le système DSM 1 peut utiliser la date de réception globale pour déterminer si les données constituant une trame de données (message) reçu d'un dispositif producteur 3P sont valides ou non (une donnée valide est une donnée non périmée) par rapport à une fenêtre temporelle de transmission, ce qui permet de diminuer le coût computationnel du système de gestion de données 1.

L'unité d'horodatage peut utiliser une base de temps qui peut être dérivée d'une heure système telle que par exemple une heure système égale à 10 nanosecondes (ns) codée sur un premier ensemble de bits (par exemple 64 bits) pour les nanosecondes et sur un autre ensemble de bits (par exemple 32 bits) pour les millisecondes. La base de temps permet ainsi de fournir un référentiel de temps commun pour tous les éléments du système DSM 1.

Les paramètres de configuration stockés dans le système de configuration 12 peuvent être déterminés en utilisant un modèle de communication et de calcul (MOCC) à partir de fichiers décrivant le flux d'échanges de données ainsi que leur type dans l'environnement de calcul, par exemple quel élément de l'environnement produit quelle donnée à quel instant, et quelle donnée est consommée par quels éléments à quel instant.

Le système DSM 1 est configuré pour identifier chaque donnée reçue par des paramètres d'identification incluant un couple d'identifiants et un indice de production. Les paramètres d'identification de données sont associés à chaque donnée reçue par le contrôleur central 110 avant de stocker la donnée reçue dans le système de mémoires 10. Les paramètres d'identification de données peuvent être avantageusement stockés dans une table de configuration du système de configuration 12. Le contrôleur central 110 est configuré pour extraire les paramètres d'identification d'une donnée des tables de configuration 120, et pour les encapsuler avec la donnée correspondante pour former une trame DSM à envoyer à un consommateur 3.

Le contrôleur central 110 est ainsi en charge de la reconstruction des trames à envoyer à partir des données stockées dans le système de mémoires 10 et des paramètres de configuration associées aux données dans la table de configuration 121.

Chaque trame reçue par le contrôleur central 110 comprend un identifiant de trame identifiant la trame de manière unique. Dans un mode de réalisation, l'identifiant de trame est représenté par une date limite de réception $D_{trame}$ (encore désignée par la notation « Frame_deadline » dans la suite de la description ou sur les figures). La date limite de réception $D_{trame}$ correspond à la date à laquelle la trame doit être au plus tard reçue. Un tel identifiant de trame permet au DSM 1 de vérifier la validité de la trame à sa réception, une trame reçue à un instant ultérieur à la date limite de réception $D_{trame}$ étant considérée comme non valide.

Une trame reconstituée par le contrôleur central 110 comprend également un identifiant de trame, et pour chaque donnée encapsulée dans la trame des paramètres de configuration de la donnée extraits des tables de configuration 121.

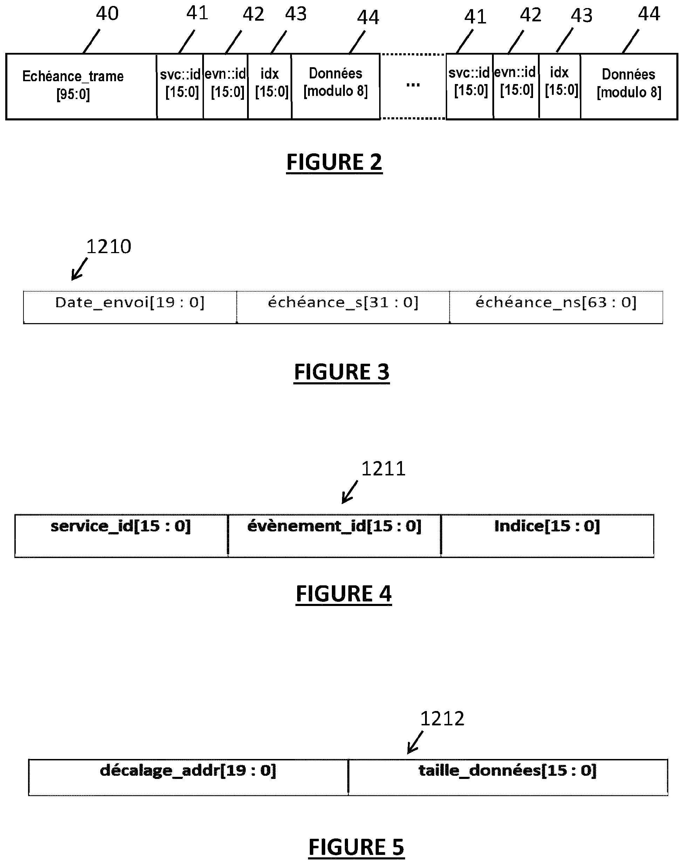

La figure 2 illustre un exemple de forme de trame reconstituée par le DSM 1.

Comme montré sur la figure 2, une trame DSM comprend :

- un champ 40 correspondant à l'identifiant de trame $D_{Trame}$, par exemple placé en entête de la trame ;

- pour chaque donnée 44, des paramètres de configuration de la donnée correspondante 41, 42 et 43 placés par exemple avant la donnée.

En réponse à la réception d'une trame reçue d'un dispositif consommateur 3C par le DSM 1, le contrôleur central 110 est configuré pour vérifier la validité de la trame reçue en utilisant l'identifiant de trame $D_{Trame}$. Si la trame est déterminée comme valide, pour chaque donnée contenue dans la trame, le contrôleur central 110 est configuré pour extraire les paramètres de données encapsulés avec la donnée. Le contrôleur central est en outre configuré pour calculer l'adresse de la donnée à partir des informations fournies par les tables de configuration et des paramètres de données associées à la donnée dans la trame reçue. Le contrôleur central 110 est en outre configuré pour stocker la donnée dans une mémoire 101 du système de mémoires 10 sélectionnée à partir de l'adresse calculée.

Le système de mémoires 10 peut comprendre une ou plusieurs mémoires 101 de types différents. Les mémoires 101 peuvent ainsi comprendre une ou plusieurs mémoires vives statiques, par exemple de type SRAM (Static Random Access Memory), et/ou des mémoires dynamiques, telles que par exemple des mémoires de type DDR (Double Data Rate).

Dans un mode de réalisation, le système de mémoires peut par exemple comprendre des mémoires SRAM et des mémoires DDR pour stocker les données produites par des serveurs (dispositifs producteurs) et consommées par des dispositifs ou systèmes clients (dispositifs consommateurs). L'utilisation de plusieurs types de mémoires et le calcul d'adresse de données à partir des paramètres de données reçus permettent aux applications clientes (dispositifs producteurs) d'atteindre un débit cible (débit attendu) défini par chaque application. Par exemple, des données volumineuses destinées à être utilisées par plusieurs applications s'exécutant dans différents dispositifs consommateurs (3C) peuvent être stockées dans la mémoire DDR par le contrôleur central 110, tandis que des données plus petites et critiques peuvent être stockées dans la mémoire SRAM, pour permettre un accès rapide à ces données. Une donnée critique est une donnée à laquelle il doit être accédé rapidement et à tout moment.

Le système DSM 1 est configuré pour mettre en œuvre une gestion de données partagées entre divers dispositifs consommateurs et producteurs, qui sont destinées à être mises en circulation dans le réseau de communication 2, l'échange de telles données pouvant utiliser différent protocoles de communication, et les données pouvant être stockées dans différentes mémoires partagées 101.

Le système DSM 1 implémente avantageusement une gestion des données partagées qui exploite des informations reçues au préalable sur la structure et l'ordonnancement des données qui constituent les trames réseau, telles que définies dans les tables configuration 121.

Le système DSM 1 peut en outre utiliser un modèle de planification abstrait pour déterminer, pour toute donnée, le délai dans lequel la donnée doit être produite, le délai dans lequel elle doit être consommée et le consommateur destinataire

(consommateur qui consommera la donnée). De telles informations de délai de production de délai de consommation et de consommateur(s) cible(s) peuvent alors être appliquées à un outil basé sur un modèle de communication et de calcul (MOCC), tel que le modèle P. Dubrulle, C. Gaston, N. Kosmatov, A. Lapitre, and S. Louise. «A Dataflow Model with Frequency Arithmetic.» 22nd International Conference on Fundamental Approaches to Software Engineering (FASE). Cham: Springer, 2019, pour générer les tables de configuration 121.

Dans un mode de réalisation, les tables de configuration 121 peuvent comprendre :

- une table de trames 1210,

- une table d'envoi 1211, et

- une table de contrôle 1212.

Les figures 3 à 5 représentent des exemples de tables de trames, d'envoi et de contrôle.

Comme représenté sur la figure 3, une table de trames 1210 contient une liste des différentes trames à envoyer sur le réseau de communication 2 par le DSM 1 à destination de dispositifs consommateurs 3C. Dans un exemple de réalisation, la table de trames 1210 peut lister jusqu'à 256 trames. L'adresse d'accès à la table de trames 1210 peut être gérée en utilisant un compteur incrémenté automatiquement au démarrage de l'exécution du DSM 1. La table de trames 1210 peut comprendre un ensemble d'informations relatives à la trame et notamment :

- La date d'émission de la trame (send_date) : la date d'émission de la trame peut être utilisée pour encapsuler plusieurs données de différents services dans une même trame, ce qui permet de saturer la bande passante. La date d'émission de la trame est cohérente avec la disponibilité de l'équipement consommateur cible en réception et le temps de transmission requis dans le réseau de communication.

- La date limite de la réception de la trame à envoyer qui comprend deux champs : un champ (deadline_s) qui correspond à la valeur de la date pour les secondes « deadline_s » codé sur un ensemble de bits (32 bits par exemple) et un champ « deadline_ns » qui correspond à la valeur de la date pour les nanosecondes (deadline_ns), codé sur un autre ensemble de bits (64 bits par exemple). Au-delà de la date de réception limite définie par les deux champs « deadline_s » et « deadline_ns », une trame reçue sera considérée comme obsolète.

La figure 3 illustre un exemple de table d'envoi 1211, selon un mode de réalisation.

La table d'envoi 1211 comprend une liste des données constituants les trames à envoyer sur le réseau de communication 2. Dans un exemple de réalisation, la table d'envoi 1211 peut définir jusqu'à 4096 données à intégrer dans les trames.

Dans la table d'envoi 1211, chaque donnée est associée à des paramètres d'identification de donnée comprenant :

- Une paire d'identifiants {service_id, event_id} comprenant un premier identifiant de donnée « service_id » et un deuxième identifiant de donnée « event_id » qui permettent d'accéder à la table de contrôle 1211 de toutes les données. Tel qu'utilisé ici, un service fait référence à une combinaison logique de zéro événement ou plus. Les évènements (« events ») fournissent des données qui sont envoyées aux consommateurs de manière cyclique ou lors d'un changement du producteur de données. La paire d'identifiants de donnée peut être encodée sur un ensemble de bits pour identifier N données (par exemple 32 bits pour identifier 4x109 de données) ;

- Un indice de donnée représentant le numéro de l'échantillon de la donnée relatif à un service/événement producteur 3. L'indice de donnée peut être encodé sur un ensemble de bits (par exemple 16 bits permettent d'adresser $65 \times 10^3$ échantillons pour une donnée).

La figure 5 représente un exemple de table de contrôle 1212, selon un mode de réalisation.

La table de contrôle 1212 définit les informations relatives à chaque donnée circulant dans le réseau de communication 2. La table de contrôle 1212 peut comprendre des informations relatives aux N données de taille variable (dans l'exemple où N = $4 \times 10^9$, la taille peut atteindre au maximum $65 \times 10^3$ octets). La paire d'identifiants de donnée stockées dans la table d'envoi 1211 représente l'adresse d'accès à la table de contrôle.

La table de contrôle 1212 peut comprendre des informations de contrôle et notamment :

- Le décalage (« offset ») de l'adresse de la donnée dans le système de mémoires 10 (« offset_addr ») ;

- La taille de la donnée à écrire ou à lire dans le système de mémoires (« data_size »). La taille « data_size » peut être définie modulo 8 pour un découpage de données cohérent avec la structure des mémoires 101 utilisées.

Dans un mode de réalisation, le contrôleur central 110 du DSM 1 peut calculer l'adresse mémoire effective de la donnée à partir du décalage d'adresse « offset_addr », de l'indice de donnée et de la taille de la donnée.

Avantageusement, pour tenir compte de la criticité des informations des tables de configuration et de leur impact sur la planification et la sécurité des communications, l'accès aux informations de la table de configuration ne nécessite pas de processus de sécurisation des données, tandis que le temps d'accès à ces données peut être limité et assez rapide. En stockant les tables de configuration 121 dans des structures de stockage distincte et de type différent des mémoires 101 du système de mémoires 10 qui stockent les données utiles. Les tables de configuration 121 peuvent par exemple être stockées dans une mémoire de type Flash, SRAM ou SDRAM.

Dans la Passerelle multi-protocoles 11, les contrôleurs de protocoles 112 et les contrôleurs de mémoires 111 peuvent être implémentés ou instanciés à partir de composants relatifs à un protocole particulier (pour les contrôleurs de protocole 112) ou à un modèle de mémoire particulier (pour les contrôleurs de mémoires 111).

Un contrôleur de protocole 112 est associé à un protocole donné et peut comprendre une interface réseau apte à intercepter les données de ce même protocole. Le protocole de communication peut être tout protocole, tel que par exemple le protocole Ethernet, TSN, PCIe, CANFD, etc. Un contrôleur de protocole 112 peut en outre comprendre une interface utilisateur apte à communiquer avec le contrôleur central 110 pour fournir et recevoir les données sous une forme unique. Le contrôleur central 110 est configuré en outre pour gérer des problèmes de communication, en mettant en œuvre une opération de transformation des données telle qu'une segmentation des données, une mise en conformité des données avec des protocoles, un décodage ou une mise au format adéquat des données.

Un contrôleur mémoire 111 est configuré pour gérer des transactions à partir de l'interface utilisateur qui communique avec le contrôleur central 110, et générer des transactions vers et depuis une mémoire cible 101. Le contrôleur mémoire 111 est configuré pour prendre en charge les paramètres de synchronisation de la mémoire et les actualiser, et pour fusionner des transactions d'écriture et de lecture afin de réduire le nombre de cycles morts impliqués dans un retournement du bus. Le contrôleur mémoire 111 réorganise également les commandes afin d'améliorer l'utilisation du bus de données vers la mémoire 101.

Le contrôleur central 110 est avantageusement configuré pour fonctionner en temps réel. Le contrôleur central 110 permet de faire un lien en temps réel, entre le système de mémoires 10, dans lequel sont stockées les données par l'intermédiaire des contrôleurs mémoires 110, et le réseau de communication 2 auquel sont connectées un ou plusieurs sous-systèmes de calcul 3 (dispositifs consommateurs et producteurs) par l'intermédiaire de contrôleurs de protocoles 112.

Le contrôleur central 110 est indépendant du support de communication utilisé.

Dans un mode de réalisation le DSM 1 peut comprendre un dispositif superviseur (non représenté) configuré pour superviser le fonctionnement du contrôleur central 110 et notamment superviser le démarrage, la suspension, ou la réinitialisation de l'exécution du contrôleur central 110. Le superviseur peut également être configuré pour contrôler l'état de fonctionnement du contrôleur central 110 en effectuant une lecture en temps réel d'un registre d'état du contrôleur central 110. Un tel registre peut comprendre des informations relatives à l'état du contrôleur central 110, ainsi que des rapports d'erreur sur l'écriture et la lecture des données. La supervision mis en œuvre par le superviseur du contrôleur central 110 permet la mise en œuvre de mécanismes de sureté de fonctionnement.

Dans un mode de réalisation, le contrôleur central 110 peut être paramétré de manière à l'adapter à l'hétérogénéité des supports de communication et des mémoires 101 qui lui sont connectés. En fonction du support de communication utilisé, les trames réseau peuvent être traitées séparément dans le contrôleur central 110 en mettant en œuvre des processus parallèles de traitement des flux de données utiles. Les tables de configuration 121 peuvent être distribuées entre les différents processus parallèle de traitement des données utiles, pour assurer un accès parallèle et rapide aux informations de configuration.

Le système de mémoires 10 peut utiliser un noyau d'interconnexion pour connecter plusieurs chemins de données d'interface AXI (Advanced eXtensible Interface), pouvant varier les uns des autres en termes de largeur de données et de domaine d'horloge. Un tel noyau d'interconnexion peut comprendre une instance de sélection de chemin, qui permet de sélectionner un chemin de données entre le contrôleur de protocole 112 et le contrôleur mémoire 111 en fonction de critères de sélection tels qu'une priorité et/ou un arbitrage alterné. Un tel noyau d'interconnexion permet une gestion des accès concurrents aux différentes mémoires 101 du système de mémorisation 10, tout en évitant les congestions entre les flux de données.

En fonction des besoins de l'environnement de calcul 100, le contrôleur central 110 peut évoluer sans qu'il ne soit nécessaire d'interrompre ou de modifier son fonctionnement. Par exemple, un ajout d'un nouvel équipement de communication ou d'un sous-système 3 dans l'environnement de calcul 100 ne requière que la duplication d'un chemin de gestion des données relatif à ce nouvel équipement et/ou l'ajout d'informations relatives au nouvel équipement dans les tables de configuration 121 pour intégrer les données requises par les nouveaux services fournis par le nouvel équipement.

Les modes de réalisation de l'invention offrent une garantie temporelle des accès aux données réparties dans le système de calcul (véhicule par exemple). Même en cas de perte ou de dysfonctionnement d'éléments communicants, aucun accès illégal à une donnée corrompue ou en retard ne peut avoir lieu. Il en résulte une très bonne fiabilité du système DSM 1.

En utilisant une structure de stockage formant une base de données centralisée et partagée par l'environnement de calcul 100, le système DSM 1 assure en outre la sécurité des communications en limitant les transactions directes entre unités de calcul (dispositifs producteurs et consommateurs). Les transactions elles-mêmes sont sécurisées : les différents équipements consommateurs connectés au réseau 2 ne nécessite pas de connaître les dispositifs producteurs 3P des données ni la localisation des dispositifs producteurs des données. Les accès aux données par les consommateurs sont filtrés, avec des droits minimaux aux données utiles.

Selon le support de communication, les trames réseau peuvent être traitées séparément dans le contrôleur central 110, ce qui permet une gestion parallèle des flux de données. Les tables de configuration 121 peuvent être distribuées entre les différents étages de gestion des données utiles, pour assurer un accès parallèle et rapide aux données de configuration.

En réponse à l'extraction d'une donnée d'une trame reçue par le DSM 1 en provenance d'un producteur 3, le contrôleur central 110 est apte à vérifier la validité de la donnée en utilisant la paire d'identifiants de donnée associés à la donnée dans les tables de configuration 121. Les tables de configuration 121 fournissent en outre un ensemble de paramètres de configuration tels que la taille de la donnée, sa localisation dans le système de mémoires 10, la criticité de la donnée et sa périodicité de production. En fonction de telles informations de configuration associées à la donnée, le contrôleur central 110 peut déterminer si la donnée doit être stockées ou supprimée, ce qui permet de filtrer des données périmées. En réponse au traitement d'une trame par le contrôleur central 110, une notification de succès ou d'échec peut être envoyée au superviseur du contrôleur central.

Le système DSM 1 est apte à stocker au moins certaines des données reçues dans une trame après un traitement préalable des données dans le système de mémoires 10 ainsi que des paramètres associés aux données dans des tables de configuration séparées des mémoires 101 et à retransmettre en temps réel des données selon des protocoles de communication différents vers différents dispositifs consommateurs 3C (par exemple des sous-systèmes de calcul et des cartes d'interfaçage), en tenant compte tenu d'un ordonnancement orienté services défini dans les tables de configuration. Dans un exemple d'application de l'invention à un véhicule automobile, les dispositifs producteurs 3P et les dispositifs consommateurs 3C peuvent être par exemple différents éléments distribués dans le véhicule et connectés au réseau de communication 2.

A la réception d'une trame, le système DSM 1 est configuré pour déterminer si la trame reçue est valide temporellement en utilisant l'identifiant de trame $D_{Trame}$ encapsulé dans la trame. Si la trame est valide, les données utiles (données applicatives) sont extraites de la trame. Pour chaque donnée extraite, le DSM 1 est configuré pour déterminer si la donnée est valide en utilisant les informations de données stockées dans les tables de configuration 121. La vérification de la validité d'une donnée reçue correspondant à un échantillon de donnée associé à un indice consiste à déterminer si un précédent échantillon de la même donnée associé à un autre indice et déjà stocké en mémoire 10 n'a pas encore été consommé par un dispositif producteur. Un tel traitement est indépendant du protocole de communication utilisé entre les différents dispositifs connectés au réseau de communication 2.

Si la donnée est valide, il est déterminé dans quelle mémoire cible 101 la donnée doit être stockée en utilisant une adresse de donnée calculée à partir des informations de configuration. Le DSM 1 stocke ensuite la donnée dans la mémoire cible.

Le DSM 1 est également configuré pour regrouper les données préalablement stockées dans le système de mémoires 10, avant construction des trames à envoyer vers les dispositifs producteurs 3.

Le procédé de regroupement qui peut être mis en œuvre par le contrôleur central 110 utilise de telles données stockées dans le système de mémoires 10 du DSM 1 pour construire une ou plusieurs trames destinées à être transmises vers des dispositifs consommateurs 3C, les trames reconstruites comprenant des données applicatives devant être consommées par un ou plusieurs dispositifs consommateurs de destination 3 connecté au réseau de communication. Les données applicatives à embarquer dans chaque trame sont déterminées dans des tables de configuration.

Le DMS 1 est en outre configuré pour transmettre les trames reconstruites en temps réel à destination d'un ou plusieurs dispositifs consommateurs 3 configurés pour consommées les données encapsulées dans les trames, selon certains modes de réalisation. Pour chaque trame reconstruite, le temps réel de la disponibilité de la trame est vérifié. La trame à transmettre est ensuite envoyée dans le réseau de communication 2 dans des fenêtres temporelles de transmission définies par le réseau de communication 2. L'instant à laquelle la trame est envoyée dans le réseau 2 peut être défini dans des tables de configuration.

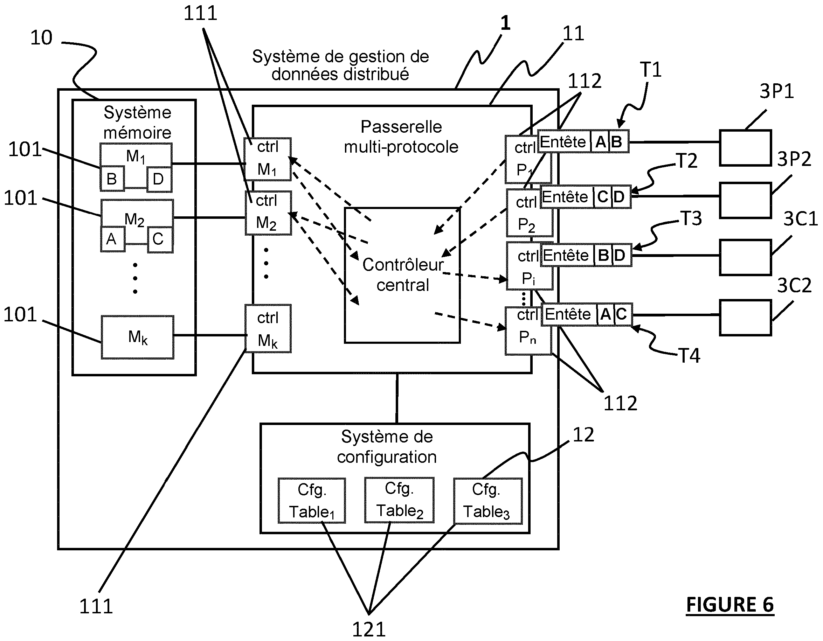

La Figure 6 représente un exemple d'implémentation du système DSM 1 selon certains modes de réalisation. Dans l'exemple de la figure 6, deux trames réseau T1 et T2 respectivement en provenance d'un premier équipement producteur 3P1 (non représenté) via un protocole P1 et d'un deuxième équipement producteur 3P2 via le protocole P2 sont reçues par le système DSM 1. La trame T1 reçue comprend des données applicatives A et B tandis que la trame T2 comprend des données applicatives C et D. Selon un ordonnancement défini dans les tables de configuration 121, un équipement 3C1 est consommateur des données A et C, tandis qu'un équipement 3C2 est consommateur des données B et D. Le système DSM 1 détermine la validité des trames T1 et T2 reçues en utilisant l'identifiant de $D_{Trame}$ reçues ainsi que la validité des données A, B, C, et D. Le système DSM 1 extrait ensuite les données applicatives A, B, C et D pour les stocker dans des mémoires 10 dont l'adresse est calculée au préalable en fonction de paramètres de configuration stockés dans les tables de configuration 121. Le système DSM met en œuvre ensuite le procédé de regroupement pour construire une première trame comprenant les données regroupées A et C et destinées à être envoyées à l'équipement consommateur 3C1 et une deuxième trame comprenant les données B et D regroupées et destinées à être émises à destination de l'équipement consommateur 3C2.

Le système DSM 1 selon les modes de réalisation de l'invention peut attendre pendant un temps d'attente avant de construire des trames réseau qui seront émises vers un équipement consommateur, jusqu'à ce qu'il dispose d'un nombre prédéfini de données parmi les données utiles à un équipement destinataire. Le temps d'attente peut être fixé, prédéfini ou calculé avant l'exécution de l'environnement de calcul distribué temps réel 100 en tenant compte de contraintes temporelles de bout en bout spécifiées pour l'ensemble des flux de données. Il en résulte une optimisation de l'utilisation de la bande passante. En particulier, l'empaquetage dans une même trame d'une pluralité de données ayant des instants de réémission proches évite la construction et l'émission de plusieurs trames de plus petites tailles.

Dans un environnement de calcul 100 distribué orienté-services, l'ajout d'un nouvel équipement à l'environnement de calcul peut être effectué sans perturber le fonctionnement du DSM 1. En particulier, les données utiles à ce nouvel équipement peuvent être spécifiées dans les tables de configuration 121 sans qu'il soit nécessaire de modifier le système DSM 1 ou d'autres éléments du système. Les tables de configuration 121 peuvent être mises à jour pour intégrer les informations relatives aux données utiles aux nouveaux équipements consommateurs. Avantageusement, le système DSM 1 peut traiter des transactions de données (réception/émission) en intégrant de manière transparente les informations relatives aux données utiles à tout nouvel équipement (consommateur et/ou producteur) dans l'environnement de calcul 100. Par ailleurs, les différents équipements 3 connectés au réseau de communication 2 ne nécessitent pas une connaissance préalable des dispositifs producteurs des données ni leur localisation.

Pour fournir les performances nécessaires à l'environnement de calcul (maîtrise du temps, faible latence, etc.), le système DSM peut être matériellement implémenté sur un circuit intégré programmable tels qu'un circuit de type FPGA (acronyme pour « Field Programmable Gate Array » signifiant littéralement « Matrice de Portes Logiques Programmables). La cohérence des données peut être maintenue au sein du système DSM 1, par exemple en pré-chargeant des données des équipements de l'environnement de calcul 100, à intervalles réguliers et de de manière autonome. Dans un exemple d'application de l'invention au domaine automobile, les équipements producteurs peuvent inclure par exemple des capteurs et les équipements consommateurs peuvent inclure des actionneurs. Toutes les communications entre les équipements producteurs et consommateurs (capteurs et actionneurs par exemple) peuvent passent par un unique système de mémoires 10, ce qui fournit une vue unifiée des mémoires 101, accessible à tous les calculateurs.

Le système DSM 1 a avantageusement une architecture modulaire constituée de la passerelle multi-protocoles 11, du système de mémoires 10 comportant une ou plusieurs mémoires hétérogènes 101, et du système de configuration 12 comprenant les trois tables de configuration (table de trames, tables d'envoi et table de contrôle). La passerelle multi-protocoles 11 comprend elle-même plusieurs sous-modules qui incluent les *n* contrôleurs de protocoles 112, les k contrôleurs de mémoires 111 et le contrôleur central 110.

Au niveau des chemins de données, les contrôleurs de protocoles 112 sont configurés pour vérifier les trames reçues par rapport à des caractéristiques du protocole du support de transmission et pour faire transiter les trames valides par le contrôleur central 110. Le contrôleur central 110 est apte à vérifier la validité de chaque trame reçue par rapport à la base de temps configurée localement et à déterminer ensuite la localisation cible des données reçues dans le système de mémoires 10 à partir de paramètres de données stockés dans les tables de configuration 121, tels que par exemple la taille et de la criticité des données. Les contrôleurs mémoires 111 sont prévus pour ouvrir l'accès vers les mémoires 101 du système de mémoires 10 et pour stocker certaines au moins des données utiles reçues dans une mémoire cible 101 du système de mémoires 10.

Par ailleurs, à partir des données stockées dans le système de mémoires 10, le contrôleur central 110 est configuré pour construire de nouvelles trames à émettre vers les dispositifs consommateurs, en regroupant au préalable les données dans les trames à émettre en fonction d'un ordonnancement prédéfini dans les tables de configuration 121. Les trames reconstruites sont ensuite envoyées aux contrôleurs de protocoles 112 pour être ensuite envoyés aux dispositifs consommateurs 3C du système de calcul 100 via le réseau de communication 2.

Plusieurs échantillons d'une même donnée, chaque échantillon correspondant à un indice donné, peuvent être reçus à différents instants par le système DSM 1. Chaque échantillon d'une donnée est associé à un ou plusieurs paramètres d'échantillon caractérisant l'échantillon. Dans un mode de réalisation, les paramètres d'échantillon comprennent :

- la paire d'identifiants de donnée {service_id, event_id} représentant un service d'un dispositif producteur 3,

- un indice d'échantillon (« index ») représentant le rang de mise à disposition de l'échantillon de donnée par le producteur, et

- un bit de validité (« valid ») représentant la disponibilité et la validité de l'échantillon de donnée.

Pour chaque paire d'identifiants de donnée {service_id, event_id}, le DSM 1 définit un tampon T configuré pour stocker l'indice d'échantillon et le bit de validité {« index », « valide »}. La taille du tampon T peut être définie hors ligne en fonction du nombre d'échantillons produits par chaque service d'un dispositif producteur et en fonction du besoin applicatif. Par exemple, pour une taille fixe de l'indice d'échantillon encodé sur 16 bits, un tampon de 8Ko peut être utilisé pour chaque paire {« index », « valide »}.

Les données issues de différents services d'un dispositif producteur peuvent être mises à jour par chaque service correspondant du dispositif producteur. Dans un tel mode de réalisation, des zones mémoires dédiées (encore appelées « blocs mémoires ») peuvent être allouées dans chaque mémoire 101 du système de mémorisation 10, chaque zone étant prévue pour stocker l'ensemble des échantillons d'un même service d'un dispositif producteur. Par exemple, une mémoire 101k du système de mémoires 10 peut être subdivisée en p zones mémoires, p désignant le nombre de services producteurs associés à la mémoire 101k (les données provenant de ces p services seront stockées dans la mémoire 101k). Un échantillon de donnée produit par un service i d'un dispositif producteur 3P sera ainsi stocké dans le bloc mémoire correspondant au service i dans une mémoire 101, ne peut être modifié que par le même service producteur. Cependant, un tel échantillon de donnée issu d'un service producteur i peut être consommé par tout dispositif consommateur (dispositif client) connecté au DSM 1 via le réseau de communication 2.

Le bit de validité peut avoir une première valeur binaire indiquant que le bit est activé ou une deuxième valeur binaire indiquant que le bit est inactivé. Dans un mode de réalisation, en réponse à la réception d'une trame par le DSM1, il est déterminé si le bit de validité d'un échantillon de donnée est activé ou non. Si le bit de validité est inactivé, l'accès à la zone mémoire associée à l'échantillon dans le système de mémoires 10 est en écriture (l'échantillon de donnée peut être « écrit » dans la zone mémoire). Sinon, si le bit de validité est activé, un accès en écriture à la zone mémoire correspondant à l'échantillon est interdit pour empêcher qu'un échantillon de donnée valide dans la zone mémoire, qui n'est pas encore consommée, ne soit écrasé par un autre échantillon de la même donnée.

Pendant la transmission d'une trame, seules les zones mémoires correspondant à des échantillons de données associés à des bits de validité activés (ayant donc la première valeur binaire) sont accessibles en lecture. Les tables de configuration 121 peuvent comprendre avantageusement des informations d'ordonnancement évènementiel pour éviter la réception d'un nouvel échantillon d'une donnée avant la consommation d'un précédent échantillon toujours valide, et/ou le déclenchement de la construction d'une trame associées à des données utiles devant être encapsulées dans la trame qui ne seraient pas encore valides. Un message d'erreur peut être envoyé au superviseur du contrôleur central 110 afin de suspendre le fonctionnement du contrôleur central 110, recalculer les temps de production, de survol et d'analyse de chaque échantillon de donnée et générer ensuite de nouvelles tables de configuration.

Ainsi, chaque service d'un dispositif producteur de données peut modifier une zone mémoire qui lui est associée dans le système de mémoires 10. En outre, le DSM 1 garantit que l'accès d'un dispositif consommateur n'est pas concurrent avec celui du dispositif producteur. Les données échangées par le système DSM 1 sont ainsi sécurisées.

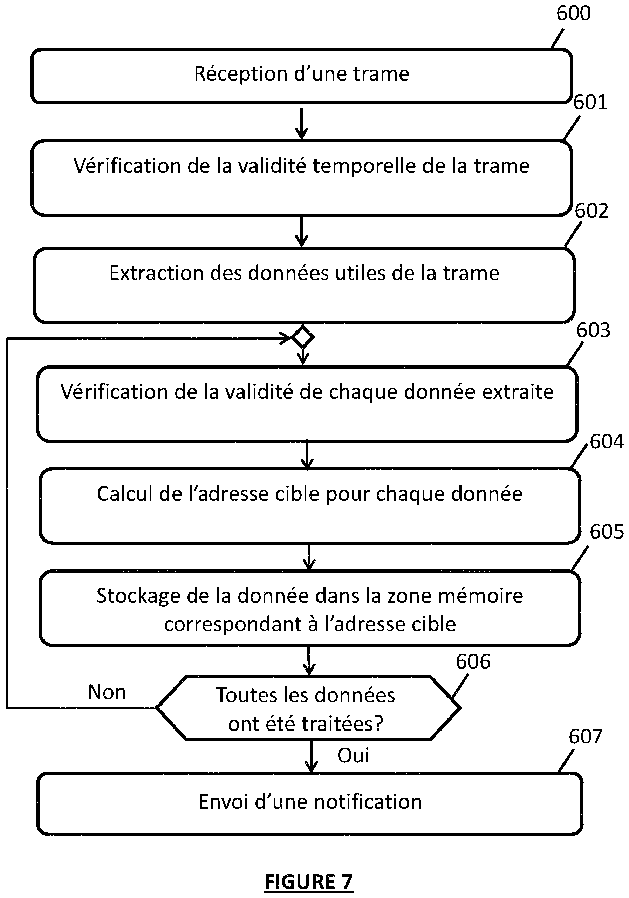

La figure 7 décrit le procédé de réception d'une trame, mis en œuvre par le DSM 1 selon certains modes de réalisation.

A l'étape 600, une trame de données est reçue en provenance d'un producteur 3.

A l'étape 601, il est déterminé si la trame reçue est valide temporellement en utilisant l'identifiant de trame $D_{Trame}$ encapsulé dans la trame.

A l'étape 601, préalablement à la vérification de validité temporelle de trame, il peut être en outre déterminé si la trame reçue doit être traitée ou non par le contrôleur centralisé en utilisant des informations indiquant les trames réseau que doit recevoir le DSM1, ainsi que des informations indiquant une correspondance entre les trames réseaux et les dispositifs producteurs. Par exemple, dans cette étape préalable, il peut être vérifié si la trame reçue a bien été émise par le bon dispositif producteur, c'est-à-dire le dispositif producteur prévu pour émettre cette trame.

Dans un mode de réalisation, l'étape 601 peut en outre comprendre préalablement à la vérification de validité temporelle de la trame reçue une étape consistant à déterminer si toutes les données ou un sous-ensemble des données de la trame reçue par le DSM 1 peuvent être redirigée directement vers le réseau de communication 2 sans avoir été au préalable stockées dans le système de mémoires 10. Dans ce mode de réalisation, de telles données ou un tel sous-ensemble de données sont redirigés directement vers des dispositifs consommateurs cibles. Un tel mode de réalisation permet d'accélérer la retransmission des données reçues par le composant DSM 1, par exemple dans les cas où des contraintes temporelles appliquées à de telles données sont incompatibles avec un stockage de ces données dans le système de mémoires 10 du système DSM 1.

A l'étape 602, si la trame est valide, les données utiles (donnée applicative) sont extraites de la trame.

A l'étape 603, pour chaque donnée extraite, il est déterminé si la donnée est valide en utilisant les informations de données stockées dans les tables de configuration 121. Il est à noter que l'étape 603 est indépendante du protocole de communication utilisé entre les différentes entités connectées au réseau de communication 2.

A l'étape 604, si la donnée est valide, il est déterminé dans quelle mémoire cible 101 la donnée doit être stockée en utilisant une adresse de donnée calculée à partir des informations de configuration.

A l'étape 605, la donnée est ensuite stockée dans la mémoire cible.

Des transferts mémoire peuvent être déclenchés pour mettre en œuvre le stockage des données dans le système de mémoires 10, selon une cartographie (« mapping ») mémoire prédéfinie, en utilisant les informations de configuration stockées dans les tables de configuration 121. Les tables de configuration 121 comprennent des informations permettant au DSM 1 de disposer d'une connaissance statique des trames reçues et de leur structure.

A l'étape 604, l'adresse mémoire correspondant au bloc mémoire cible du système de mémorisation 10 dans lequel doit être stocker la donnée considérée peut être calculée à partir de l'indice (indice d'échantillon « index ») de donnée associée à la donnée. Dans un mode de réalisation, l'adresse mémoire cible « *address_write* » du système de mémoires 10 du système DSM 1 est calculée à partir de l'indice de donnée « index » selon l'équation (1) suivante :

$$address\_write = offset\_addr + index * data\_size \qquad (1)$$

Dans l'équation (1), le paramètre « *offset_addr* » désigne l'adresse du tampon T stockant l'indice d'échantillon et le paramètre « *data_size* » désigne la taille de l'échantillon.

A l'étape 605, un accès à la mémoire cible correspondant à l'adresse mémoire cible peut-être ouvert par le contrôleur mémoire correspondant 111 pour permettre le stockage de chaque donnée considérée dans la zone mémoire qui lui est allouée (qui peut être par exemple la zone dédiée à un même service d'un dispositif producteur).

Les étapes 603 à 605 peuvent être réitérées pour chaque donnée extraite à stocker dans le système de mémoires 10 jusqu'à ce que toutes les données de la trame reçue aient été traitées (étape 606).

A l'étape 607, une notification peut être envoyée à un superviseur logiciel (par exemple par le contrôleur central 110) pour lui notifier la fin des transferts des données entre le contrôleur protocole 112 et le contrôleur mémoire 111 de la passerelle multi-protocoles 11 du système DSM.

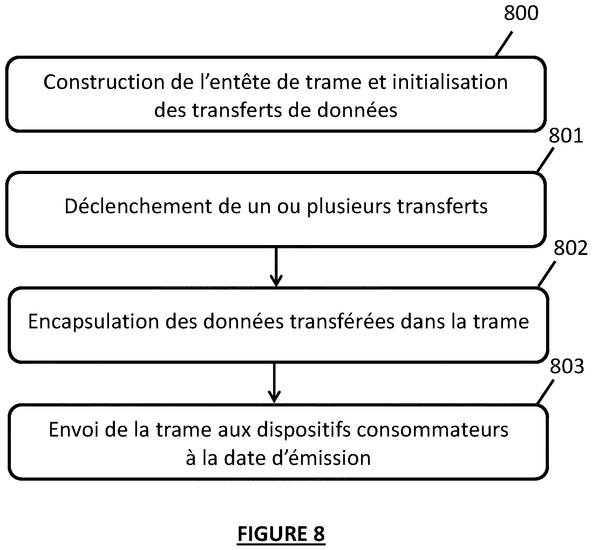

La figure 8 représente le procédé de transmission de trames temps réel mis en œuvre par le contrôleur central 110 du système DSM 1 pour transmettre les trames reconstruites, selon certains modes de réalisation. Les trames sont émises vers un ou plusieurs consommateurs destinataires 3C destinés à consommer les données encapsulées dans les trames.

Le procédé de transmission de trames est mis en œuvre pour construire et émettre des trames en tenant compte d'informations d'ordonnancement évènementiel stockées dans les tables de configuration 121 pour déterminer les données à regrouper dans les trames, l'instant d'émission des échantillons de données, et les dispositifs consommateurs cibles 3.

A l'étape 800, l'entête de la trame à émettre est construit. Par ailleurs, à l'étape 800, des demandes de lecture sont émises pour initier des transferts de données du système de mémoires 10 vers le contrôleur protocole correspondant 112 du système DSM 1 avant d'émettre la trame. A l'étape 800, des informations de trames stockées dans les tables de configuration 121 fournissant des informations relatives aux trames à émettre et des informations de structure de trames peuvent être utilisées.

A l'étape 801, un ou plusieurs transferts mémoires parmi les transferts mémoires initiés à l'étape 800 sont déclenchés. Les transferts mémoires déclenchés transfèrent une ou plusieurs données à inclure dans les trames du système de mémoires 10 vers le contrôleur central 110 du système DSM 1. De telles données vont former la partie applicative (44) de la trame réseau. En fonction de nombre de données à transférer depuis le système de mémoires 10, l'étape 801 peut être réitérée jusqu"à ce que la partie applicative de la trame réseau à émettre soit intégralement construite (étape 802).

En réponse à la détection de la fin des transferts mémoires, la trame à émettre est mise à disposition pour être envoyée par le contrôleur de protocole correspondant 112 vers un dispositif consommateur, si le contrôleur de protocole est disponible. Dans des modes de réalisation, si le contrôleur de protocole est bloqué pendant une période de temps prédéfinie, la trame peut être rejetée. La disponibilité du contrôleur de protocole 112 peut dépendre de la disponibilité du dispositif consommateur cible (la disponibilité d'un contrôleur de protocole peut être activée en réponse à un signal de disponibilité reçu par le dispositif consommateur cible). A l'étape 803, le contrôleur de protocole déclenche la transmission de la trame à la date d'émission (« Send Date ») associée à la trame dans les tables de configuration 121.

Une surveillance du trafic réseau peut être mise en place pendant l'émission et/ou la réception de trame par le système DSM 1.

Dans un mode de réalisation, il peut être déterminé le délai maximum $\Delta max$ entre la production d'un nouvel échantillon d'une donnée (correspondant à un indice donné) et la mise à disposition de cet échantillon dans le système de mémoires 10.

Le délai maximum $\Delta'max$ entre une demande d'accès à une donnée, depuis le système de mémoires 10, et la mise à disposition de la donnée à un dispositif consommateur 3C peut être également calculé.

Le délai $\Delta max$ et/ou le délai $\Delta'max$ peuvent être calculés à partir des temps de réception/d'émission des trames réseaux entre un contrôleur de protocole 112 du système DSM 1 et le système de mémoires 10, ces temps étant dépendants de l'architecture interne du système DSM 1.

Dans un mode de réalisation, il peut être vérifié si la contrainte de transmission de bout en bout pour une donnée est satisfaite. En particulier, il peut être vérifié si une telle contrainte est satisfaite en déterminant si la somme des délais temporels maximums intervenant dans les différentes étapes du cheminement d'une donnée du service d'un dispositif producteur 3P jusqu'aux dispositifs consommateurs 3C cibles est inférieure à une valeur seuil représentant la contrainte de temps de bout en bout, un tel seuil tenant compte des comportements temporels des différents supports de transmission du réseau de communication 2.

Les modes de réalisation de l'invention fournissent ainsi un système DSM 1 équipé de différents types de contrôleur réseau 112 (par exemple, un contrôleur CAN, un contrôleur PCIe, un contrôleur TSN/Ethernet, etc.) dans un même support physique. Le stockage des données dans le système de mémoires 10 est avantageusement réalisé de manière indépendante des étages de gestion parallèle des différents flux de données, ce qui offre un accès unifié aux données par tous les dispositifs (équipement, sous-système) connectés au réseau de communication 2 dans le système de calcul 100. Le DSM 1 permet avantageusement un traitement des données reçues dans les trames depuis des dispositifs producteurs 3P qui satisfait un ordonnancement prédéfini dans le système de configuration 12. Le système DSM selon les modes de réalisation de l'invention forme par conséquent un système de transmission multi-protocoles, pouvant être utilisé dans tout environnement de calcul distribuée RT orientée services, dans laquelle des données reçues d'un dispositif producteur 3P via un protocole donné peuvent être retransmises via un autre protocole vers un dispositif consommateur 3C, sans que le dispositif consommateur 3C ne nécessite la connaissance du dispositif producteur de la donnée (ce qui augmente la sécurité des données partagées). Avantageusement, la transmission des données stockées peut n'être déclenchée que lorsqu'au moins un dispositif consommateur destinataire du réseau 2 a besoin de telles données, ce qui évite d'encombrer le réseau 2 et tous les nœuds (dispositifs producteurs) connectés au réseau 2.

Le système DSM 1 selon les modes de réalisation permet ainsi un échange de données déterministe garantissant la maîtrise des temps de propagation des signaux, des latences de transmission des données, et du temps de traitement des données, tout en assurant un haut niveau de sécurité pour les données stockées dans le système de mémoires. Le système DSM 1 est particulièrement adapté à des applications critiques, nécessitant un accès rapide à des données à tout moment.

Les modes de réalisation de l'invention permettent en outre d'optimiser l'utilisation de la bande passante de façon déterministe via l'empaquetage dans une même trame des données ayant des instants de réémission proches, reçue de protocoles de communication potentiellement différents. En particulier, en évitant la construction et l'émission de plusieurs trames de plus petites tailles, la bande passante utilisée pour les en-têtes de protocoles dans les paquets est optimisée.

Les modes de réalisation de l'invention facilitent l'ajout d'équipements dans le système, les données utiles à un nouvel équipement pouvant être disponibles directement sur le système DSM 1 lui-même, sans nécessiter de modifications des autres équipements.

Le système DSM 1, ainsi que le procédé de réception de trames selon les modes de réalisation peuvent en outre détecter toute violation d'échéance dans les accès aux données partagées, de telles violations pouvant par exemple provenir de pertes de paquets sur les réseaux connectés, ou encore de délais à l'émission ou à la réception par les composants logiciels. Par exemple, une perte d'un paquet peut être détectée en comparant les indices des échantillons reçus par le DSM 1 pour chaque donnée, après extraction de la donnée de la trame reçue. Un retard de réception de données peut être détecté en comparant la date d'expiration de la donnée à la date de réception. La date d'expiration de la donnée peut être calculée en fonction de l'indice associé à la donnée.

Dans un exemple de réalisation, la date d'expiration d'un échantillon peut en particulier être déterminée en comparant :

- le produit P de l'indice de l'échantillon par la période de production des échantillons d'une même donnée, avec

- une fenêtre temporelle fournie par un compteur de temps local.

Ainsi le système DSM 1 peut garantir la sureté et l'efficience des transactions, en détectant au plus tôt les violations d'échéance, et en prévenant une propagation des accès erronés qui évite que d'autres dispositifs consommateurs ne soient impactés et que la bande passante ne soit utilisée pour transmettre des données périmées.

L'homme du métier comprendra que le système ou des sous-système selon les modes de réalisation de l'invention peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée aux exemples de protocoles cités à titre d'exemple dans la description ci avant, et peut inclure d'autres types de protocoles. Par ailleurs, l'homme du métier comprendra que l'invention n'est pas limitée aux exemples de système de calculs mentionnés dans la description ci avant. Le système DSM 1 selon les modes de réalisation de l'invention peut être intégré dans tout environnement ou système de calcul dans lequel des données sont produites par des dispositifs producteurs connectés à un réseau de communication et consommées par des dispositifs consommateurs connectés à ce même réseau de communication. Des exemples de systèmes de calculs incluent sans limitation des environnements destinés à l'automobile, à l'aéronautique ou à la défense.

**Revendications**

1. Système de gestion de données partagées (1) configuré pour recevoir des trames comprenant des données d'un ou plusieurs dispositifs producteurs (3P) et pour transmettre des trames reconstruites à destination de un ou plusieurs dispositifs consommateurs (3C), un dispositif producteur (3P) et un dispositif consommateur (3C) étant connectés au système de gestion de données partagées par l'intermédiaire d'un réseau de communication en utilisant un protocole de communication, le système de gestion de données partagées (1) comprenant un système de mémoires (10) comprenant plusieurs mémoires séparées formant un espace d'adresses partagées (101), **caractérisé en ce que** les trames sont reconstruites en utilisant les données stockées dans le système de mémoire (10), et **en ce que** le système de gestion de données partagées (1) comprend un contrôleur central (110) configuré pour stocker certaines au moins des données encapsulées dans une trame reçue d'un dispositif producteur dans une mémoire cible du système de mémoires (10), un ou plusieurs échantillons d'une même donnée étant émis par ledit dispositif producteur, le contrôleur central étant configuré, en réponse à une trame reçue, pour :

- déterminer si la trame reçue est valide temporellement en utilisant un identifiant de trame,
- extraire des données de la trame reçue si la trame est valide,
- calculer, pour chaque donnée extraite de ladite trame reçue, l'adresse de la mémoire cible à partir d'un indice d'échantillon associé à la donnée dans la trame reçue,
- déterminer si la donnée est valide en utilisant des informations de données, et
- stocker la donnée à l'adresse de la mémoire cible si la donnée est valide.

2. Système de gestion de données partagées selon la revendication 1, **caractérisé en ce que** le contrôleur central (110) est en outre configuré pour calculer un bit de validité pour la donnée reçue en fonction d'une date d'expiration associée à la donnée, ledit bit de validité étant mis à une valeur de validité si aucun échantillon précédant de la donnée, associé à un autre indice n'est stocké dans le système de mémoires (10).

3. Système de gestion de données partagées selon la revendication 2, **caractérisé en ce que** le contrôleur central est apte à détecter un retard de réception de données encapsulées dans une trame reçue en comparant la date d'expiration de la donnée à la date de réception de la donnée.

4. Système de gestion de données partagées selon l'une des revendications 2 et 3, **caractérisé en ce que** la date d'expiration est calculée à partir de l'indice de la donnée.

5. Système de gestion de données partagées selon l'une des revendications précédentes, **caractérisé en ce qu'**il comprend au moins une structure de données de configuration stockant les informations de configuration associées aux trames, aux données, aux dispositifs producteurs et aux dispositifs consommateurs connectés au système de gestion de données partagées par l'intermédiaire du réseau de communication, le contrôleur central (110) utilisant en outre des informations stockées dans lesdites structures de données de configuration (121) pour déterminer l'adresse de la mémoire cible.

6. Système de gestion de données partagées selon la revendication 5, **caractérisé en ce que** ladite au moins une structure de données de configuration (121) comprend :

- Une table de trames (1210) comprenant une liste des trames à envoyer sur le réseau de communication (2) par le système de gestion de données partagées (1) à destination de dispositifs consommateurs (3C) ; et/ou
- Une table d'envoi (1211) comprenant une liste des données à encapsuler dans les trames à envoyer sur le réseau de communication (2), chaque donnée étant identifiée par au moins un identifiant de donnée ; et/ou
- Une table de contrôle (1212) comprenant les informations relatives à chaque donnée circulant dans le réseau de communication (2), le ou les identifiants de donnée stockées dans la table d'envoi (1211) représentant l'adresse d'accès à la table de contrôle.

7. Système de gestion de données partagées selon la revendication 6, **caractérisé en ce que** la table de trames (1210) comprend pour chaque trame à émettre:

- la date d'émission de la trame ; et
- la date limite de réception de la trame représentant la date à laquelle la trame doit être reçue au plus tard.

8. Système de gestion de données partagées selon l'une des revendications 6 et 7, **caractérisé en ce que** la table d'envoi (1211) comprend pour chaque donnée de la liste :

- une paire d'identifiants; et
- un indice de donnée représentant l'adresse de la donnée relative à un dispositif producteur (3P).

9. Système de gestion de données partagées selon l'une des revendications 6 à 8, **caractérisé en ce que** la table de contrôle (1212) comprend :

   - un paramètre de décalage de l'adresse de la donnée dans le système de mémoires (10) ; et
   - la taille de la donnée.

10. Système de gestion de données partagées selon la revendication 9, **caractérisé en ce que** le contrôleur central (110) est configuré pour calculer l'adresse mémoire cible d'une donnée en utilisant en outre le décalage d'adresse et de la taille de la donnée stockés dans la table de contrôle.

11. Système de gestion de données partagées selon la revendication 9, **caractérisé en ce que** l'adresse mémoire cible d'une donnée est égale à la somme du décalage d'adresse et de la taille de la donnée stockés dans la table de contrôle.

12. Système de gestion de données partagées selon l'une des revendications 5 à 10, **caractérisé en ce que** le contrôleur central est configuré pour construire les trames à émettre en regroupant les données dans les trames en fonction du dispositif consommateur cible et de la date d'émission associée à la trame dans les structures de données de configuration.

13. Système de gestion de données partagées selon l'une des revendications précédentes, **caractérisé en ce qu'**il comprend une pluralité de contrôleurs mémoires (111) faisant l'interface entre le système de mémoires (10) et le contrôleur central (110) et un ou plusieurs contrôleurs de protocoles (112) faisant l'interface entre le contrôleur central (110) et les dispositifs producteurs et consommateurs, chaque contrôleur de protocole étant spécifique à un protocole donné.

14. Système de gestion de données partagées selon l'une des revendications précédentes, **caractérisé en ce que** le système de mémoires comprend au moins une zone de mémoire dédiée associée à un dispositif producteur donnée, les données stockées dans une zone mémoire donnée comprenant les données produites par le dispositif producteur associé à ladite zone mémoire dédiée.

15. Procédé de gestion de données partagées (1) mis en œuvre dans un système de gestion de données partagées pour recevoir des trames comprenant des données d'un ou plusieurs dispositifs producteurs (3P) et pour transmettre des trames reconstruites à destination de un ou plusieurs dispositifs consommateurs (3C), un dispositif producteur (3P) et un dispositif consommateur (3C) étant connectés au système de gestion de données partagées par l'intermédiaire d'un réseau de communication en utilisant un protocole de communication, le système de gestion de données partagées (1) comprenant un système de mémoires (10) comprenant plusieurs mémoires séparées formant un espace d'adresses partagées (101), **caractérisé en ce que** les trames sont reconstruites en utilisant les données stockées dans le système de mémoire (10) et **en ce que** le procédé comprend une étape de stockage de certaines au moins des données encapsulées dans une trame reçue d'un dispositif producteur dans une zone mémoire cible du système de mémoires (10), un ou plusieurs échantillons d'une même donnée étant émis par ledit dispositif producteur, le procédé comprenant, en réponse à une trame reçue, les étapes consistant à :

    - déterminer si la trame reçue est valide temporellement en utilisant un identifiant de trame,
    - extraire des données de la trame reçue si la trame est valide,
    - calculer, pour chaque donnée extraite de ladite trame reçue, l'adresse de la mémoire cible à partir d'un indice d'échantillon associé à la donnée dans la trame reçue,
    - déterminer si la donnée est valide temporellement en utilisant des informations de données, et
    - stocker la donnée à l'adresse de la mémoire cible si la donnée est valide.

**Patentansprüche**

1. System zum Verwalten von geteilten Daten (1), das dafür konfiguriert ist, Datenframes zu empfangen, die Daten von einer oder mehreren Erzeugervorrichtungen (3P) umfassen, und rekonstruierte Datenframes an eine oder mehrere Verbrauchervorrichtungen (3C) zu übertragen, wobei eine Erzeugervorrichtung (3P) und eine Verbrauchervorrichtung (3C) mittels eines Kommunikationsnetzes unter Verwendung eines Kommunikationsprotokolls mit dem Verwaltungssystem für geteilte Daten verbunden sind, wobei das System zum Verwalten von geteilten Daten (1) ein Speichersystem (10) umfasst, das mehrere getrennte Speicher umfasst, die einen Raum für geteilte Adressen (101) bilden, **dadurch gekennzeichnet, dass** die Datenframes unter Verwendung der in dem Speichersystem (10) gespeicherten Daten rekonstruiert werden, und dass das System zum Verwalten von geteilten Daten (1) einen zentralen Controller (110) umfasst, der dafür konfiguriert ist, mindestens bestimmte der Daten, die in einem Datenframe eingekapselt sind, der von einer Erzeugervorrichtung empfangen wird, in einem Zielspeicher des Speichersystems (10) zu speichern, wobei ein oder mehrere Abtastwerte eines gleichen Datums von der Erzeugervorrichtung ausgegeben werden, wobei der zentrale Controller dafür konfiguriert ist, als Reaktion auf einen empfangenen Datenframe:

- unter Verwendung einer Datenframekennung zu bestimmen, ob der empfangene Datenframe vorübergehend gültig ist,
- Daten des empfangenen Datenframes zu extrahieren, wenn der Datenframe gültig ist,
- für jedes von dem empfangenen Datenframe extrahierte Datum die Adresse des Zielspeichers anhand einer Abtastwertkennzahl, die dem Datum in dem empfangenen Datenframe zugeordnet ist, zu berechnen,
- unter Verwendung von Dateninformationen zu bestimmen, ob das Datum gültig ist, und
- das Datum an der Adresse des Zielspeichers zu speichern, wenn das Datum gültig ist.

2. System zum Verwalten von geteilten Daten nach Anspruch 1, **dadurch gekennzeichnet, dass** der zentrale Controller (110) ferner dafür konfiguriert ist, ein Gültigkeitsbit für das empfangene Datum in Abhängigkeit von einem dem Datum zugeordneten Verfallsdatum zu berechnen, wobei das Gültigkeitsbit auf einen Gültigkeitswert gesetzt wird, wenn kein vorhergehender Abtastwert des Datums, der einer anderen Kennzahl zugeordnet ist, in dem Speichersystem (10) gespeichert ist.

3. System zum Verwalten von geteilten Daten nach Anspruch 2, **dadurch gekennzeichnet, dass** der zentrale Controller in der Lage ist, eine Empfangsverzögerung von in einem empfangenen Datenframe eingekapselten Daten zu erkennen, indem er das Verfallsdatum des Datums mit dem Empfangsdatum des Datums vergleicht.

4. System zum Verwalten von geteilten Daten nach einem der Ansprüche 2 und 3, **dadurch gekennzeichnet, dass** das Verfallsdatum anhand der Kennzahl des Datums berechnet wird.

5. System zum Verwalten von geteilten Daten nach einem der vorhergehenden Ansprüche, **dadurch gekennzeichnet, dass** es mindestens eine Konfigurationsdatenstruktur umfasst, die die Konfigurationsinformationen speichert, die den Datenframes, den Daten, den Erzeugervorrichtungen und den Verbrauchervorrichtungen zugeordnet sind, die mit dem System zum Verwalten von geteilten Daten durch das Kommunikationsnetz verbunden sind, wobei der zentrale Controller (110) ferner Informationen verwendet, die in den Konfigurationsdatenstrukturen (121) gespeichert sind, um die Adresse des Zielspeichers zu bestimmen.

6. System zum Verwalten von geteilten Daten nach Anspruch 5, **dadurch gekennzeichnet, dass** die mindestens eine Konfigurationsdatenstruktur (121) Folgendes umfasst:

- eine Datenframetabelle (1210), umfassend eine Liste der Datenframes, die auf dem Kommunikationsnetz (2) von dem System zum Verwalten von geteilten Daten (1) an die Verbrauchervorrichtungen (3C) zu senden sind; und/oder
- eine Sendetabelle (1211), umfassend eine Liste der Daten, die in den Datenframes einzukapseln sind, die auf dem Kommunikationsnetz (2) zu senden sind, wobei jedes Datum durch mindestens eine Datenkennung identifiziert wird; und/oder
- eine Steuertabelle (1212), umfassend die Informationen betreffend jedes Datum, das in dem Kommunikationsnetz (2) zirkuliert, wobei die eine oder die mehreren Datenkennungen, die in der Sendetabelle (1211) gespeichert sind, die Zugangsadresse zu der Steuertabelle darstellt.

7. System zum Verwalten von geteilten Daten nach Anspruch 6, **dadurch gekennzeichnet, dass** die Datenframetabelle (1210) für jeden auszugebenden Datenframe Folgendes umfasst:

- das Ausgabedatum des Datenframes; und
- den letzten Empfangstermin des Datenframes, der das Datum darstellt, an dem der Datenframe spätestens empfangen sein muss.

8. System zum Verwalten von geteilten Daten nach einem der Ansprüche 6 und 7, **dadurch gekennzeichnet, dass** die Sendetabelle (1211) für jedes Datum der Liste Folgendes umfasst:

- ein Paar von Kennungen; und
- eine Datumskennzahl, die die Adresse des Datums betreffend eine Erzeugervorrichtung (3P) darstellt.

9. System zum Verwalten von geteilten Daten nach einem der Ansprüche 6 bis 8, **dadurch gekennzeichnet, dass** die Steuertabelle (1212) Folgendes umfasst:

- einen Verschiebungsparameter für die Adresse des Datums in dem Speichersystem (10); und
- die Größe des Datums.

10. System zum Verwalten von geteilten Daten nach Anspruch 9, **dadurch gekennzeichnet, dass** der zentrale Controller (110) dafür konfiguriert ist, die Zielspeicheradresse eines Datums ferner unter Verwendung der Adressenverschiebung und der Größe des Datums, die in der Steuertabelle gespeichert sind, zu berechnen.

11. System zum Verwalten von geteilten Daten nach Anspruch 9, **dadurch gekennzeichnet, dass** die Zielspeicheradresse eines Datums gleich der Summe der Adressenverschiebung und der Größe des Datums, die in der Steuertabelle gespeichert sind, ist.

12. System zum Verwalten von geteilten Daten nach einem der Ansprüche 5 bis 10, **dadurch gekennzeichnet, dass** der zentrale Controller dafür konfiguriert ist, die auszugebenden Datenframes durch Neugruppieren der Daten in den Datenframes in Abhängigkeit von der Zielverbrauchervorrichtung und dem Ausgabedatum, das dem Datenframe in den Konfigurationsdatenstrukturen zugeordnet ist, zu konstruieren.

13. System zum Verwalten von geteilten Daten nach einem der vorhergehenden Ansprüche, **dadurch gekennzeichnet, dass** es eine Vielzahl von Speichercontrollern (111), die die Schnittstelle zwischen dem Speichersystem (10) und dem zentralen Controller (110) herstellen, und einen oder mehrere Protokollcontroller (112) umfasst, die die Schnittstelle zwischen dem zentralen Controller (110) und den Erzeuger- und Verbrauchervorrichtungen herstellen, wobei jeder Protokollcontroller für ein gegebenes Protokoll spezifisch ist.

14. System zum Verwalten von geteilten Daten nach einem der vorhergehenden Ansprüche, **dadurch gekennzeichnet, dass** das Speichersystem mindestens einen dedizierten Speicherbereich umfasst, der einer Datenerzeugervorrichtung zugeordnet ist, wobei die in einem gegebenen Speicherbereich gespeicherten Daten die Daten umfassen, die von der Erzeugervorrichtung erzeugt werden, die dem dedizierten Speicherbereich zugeordnet ist.

15. Verfahren zum Verwalten von geteilten Daten (1), das in einem System zum Verwalten von geteilten Daten implementiert wird, um Datenframes zu empfangen, die Daten von einer oder mehreren Erzeugervorrichtungen (3P) umfassen, und um rekonstruierte Datenframes an eine oder mehrere Verbrauchervorrichtungen (3C) zu übertragen, wobei eine Erzeugervorrichtung (3P) und eine Verbrauchervorrichtung (3C) mit dem System zum Verwalten von geteilten Daten mittels eines Kommunikationsnetzes unter Verwendung eines Kommunikationsprotokolls verbunden sind, wobei das System zum Verwalten von geteilten Daten (1) ein Speichersystem (10) umfasst, das mehrere getrennte Speicher umfasst, die einen Raum für geteilte Adressen (101) bilden, **dadurch gekennzeichnet, dass** die Datenframes unter Verwendung der in dem Speichersystem (10) gespeicherten Daten rekonstruiert werden, und dass das Verfahren einen Schritt zum Speichern mindestens von bestimmten Daten, die in einem Datenframe eingekapselt sind, der von einer Erzeugervorrichtung empfangen wird, in einem Zielspeicherbereich des Speichersystems (10) umfasst, wobei ein oder mehrere Abtastwerte desselben Datums von der Erzeugervorrichtung ausgegeben werden, wobei das Verfahren als Reaktion auf einen empfangenen Datenframe die folgenden Schritte umfasst:

- unter Verwendung einer Datenframekennung, Bestimmen, ob der empfangene Datenframe vorübergehend gültig ist,
- Extrahieren von Daten des empfangenen Datenframes, wenn der Datenframe gültig ist,
- für jedes von dem empfangenen Datenframe extrahierte Datum, Berechnen der Adresse des Zielspeichers anhand einer Abtastwertkennzahl, die dem Datum in dem empfangenen Datenframe zugeordnet ist,
- Bestimmen, ob das Datum vorübergehend gültig ist, unter Verwendung von Dateninformationen,
- Speichern des Datums an der Adresse des Zielspeichers, wenn das Datum gültig ist.

**Claims**

1. A shared data management system (1) configured to receive frames comprising data from one or more producer devices (3P) and to transmit reconstructed frames to one or more consumer devices (3C), a producer device (3P) and a consumer device (3C) being connected to the shared data management system by means of a communication network using a communication protocol, the shared data management system (1) comprising a memory system (10) comprising several separate memories forming a shared addresses space (101), **characterised in that** the frames are reconstructed using the data stored in the memory system (10), and **in that** the shared data management system (1) comprises a central controller (110) configured to store at least some of the data encapsulated in a frame received from a producer device in a target memory of the memory system (10), one or more samples of the same datum being transmitted by said producer device, the central controller, in response to a received frame, being configured to:

   - determine whether the received frame is temporally valid using a frame identifier,
   - extract data from the received frame if the frame is valid,
   - compute, for each datum extracted from said received frame, the address of the target memory based on a sample index associated with the datum in the received frame,
   - determine whether the datum is valid using data information, and
   - store the datum in the address of the target memory if the datum is valid.

2. The shared data management system according to claim 1, **characterised in that** the central controller (110) is further configured to compute a validity bit for the received datum as a function of an expiry date associated with the datum, said validity bit being set to a validity value if no preceding sample of the datum, associated with another index, is stored in the memory system (10).

3. The shared data management system according to claim 2, **characterised in that** the central controller is able to detect a delay in receiving data encapsulated in a received frame by comparing the expiry date of the datum with the reception date of the datum.

4. The shared data management system according to any of claims 2 and 3, **characterised in that** the expiry date is computed based on the index of the datum.

5. The shared data management system according to any of the preceding claims, **characterised in that** it comprises at least one configuration data structure storing the configuration information associated with the frames, the data, the producer devices and the consumer devices connected to the shared data management system by means of the communication network, the central controller (110) further using information stored in said configuration data structures (121) to determine the address of the target memory.

6. The shared data management system according to claim 5, **characterised in that** said at least one configuration data structure (121) comprises:

   - a frame table (1210) comprising a list of frames to be sent over the communication network (2) by the shared data management system (1) to consumer devices (3C); and/or
   - a sending table (1211) comprising a list of the data to be encapsulated in the frames to be sent over the communication network (2), each datum being identified by at least one datum identifier; and/or
   - a control table (1212) comprising the information relating to each datum flowing through the communication network (2), the one or more datum identifiers stored in the sending table (1211) representing the access address for accessing the control table.

7. The shared data management system according to claim 6, **characterised in that**, for each frame to be transmitted, the frame table (1210) comprises:

   - the transmission date of the frame; and
   - the deadline date for receiving the frame, representing the date on which the frame must be received at the latest.

8. The shared data management system according to any of claims 6 and 7, **characterised in that**, for each datum in the list, the sending table (1211) comprises:

   - a pair of identifiers; and

- a datum index representing the address of the datum relative to a producer device (3P).

9. The shared data management system according to any of claims 6 to 8, **characterised in that** the control table (1212) comprises:

   - an offset parameter for the address of the datum in the memory system (10); and
   - the size of the datum.

10. The shared data management system according to claim 9, **characterised in that** the central controller (110) is configured to compute the target memory address of a datum by further using the address offset and the size of the datum that are stored in the control table.

11. The shared data management system according to claim 9, **characterised in that** the target memory address of a datum is equal to the sum of the address offset and the size of the datum that are stored in the control table.

12. The shared data management system according to any of claims 5 to 10, **characterised in that** the central controller is configured to construct the frames to be transmitted by grouping the data into the frames as a function of the target consumer device and of the transmission date associated with the frame in the configuration data structures.

13. The shared data management system according to any of the preceding claims, **characterised in that** it comprises a plurality of memory controllers (111) acting as the interface between the memory system (10) and the central controller (110), and one or more protocol controllers (112) acting as the interface between the central controller (110) and the producer and consumer devices, each protocol controller being specific to a given protocol.

14. The shared data management system according to any of the preceding claims, **characterised in that** the memory system comprises at least one dedicated memory zone associated with a data producer device, the data stored in a given memory zone comprising the data produced by the producer device associated with said dedicated memory zone.

15. A shared data management method (1) implemented in a shared data management system for receiving frames comprising data from one or more producer devices (3P) and for transmitting reconstructed frames to one or more consumer devices (3C), a producer device (3P) and a consumer device (3C) being connected to the shared data management system by means of a communication network using a communication protocol, the shared data management system (1) comprising a memory system (10) comprising several separate memories forming a shared addresses space (101), **characterised in that** the frames are reconstructed using the data stored in the memory system (10), and **in that** the method comprises a step of storing at least some of the data encapsulated in a frame received from a producer device in a target memory zone of the memory system (10), one or more samples of the same datum being transmitted by said producer device, the method comprising, in response to a received frame, the following steps of:

   - determining whether the received frame is temporally valid using a frame identifier,
   - extracting data from the received frame if the frame is valid,
   - computing, for each datum extracted from said received frame, the address of the target memory based on a sample index associated with the datum in the received frame,
   - determining whether the datum is temporally valid using data information, and
   - storing the datum in the address of the target memory if the datum is valid.

**FIGURE 1**

40   41   42   43   44        41   42   43   44

| Echéance_trame [95:0] | svc::id [15:0] | evn::id [15:0] | idx [15:0] | Données [modulo 8] | ... | svc::id [15:0] | evn::id [15:0] | idx [15:0] | Données [modulo 8] |
|---|---|---|---|---|---|---|---|---|---|

## FIGURE 2

1210

| Date_envoi[19 : 0] | échéance_s[31 : 0] | échéance_ns[63 : 0] |
|---|---|---|

## FIGURE 3

1211

| service_id[15 : 0] | évènement_id[15 : 0] | Indice[15 : 0] |
|---|---|---|

## FIGURE 4

1212

| décalage_addr[19 : 0] | taille_données[15 : 0] |
|---|---|

## FIGURE 5

FIGURE 6

600

Réception d'une trame

601

Vérification de la validité temporelle de la trame

602

Extraction des données utiles de la trame

603

Vérification de la validité de chaque donnée extraite

604

Calcul de l'adresse cible pour chaque donnée

605

Stockage de la donnée dans la zone mémoire
correspondant à l'adresse cible

606

Non — Toutes les données
ont été traitées?

Oui

607

Envoi d'une notification

**FIGURE 7**

800

Construction de l'entête de trame et initialisation
des transferts de données

801

Déclenchement de un ou plusieurs transferts

802

Encapsulation des données transférées dans la trame

803

Envoi de la trame aux dispositifs consommateurs
à la date d'émission

**FIGURE 8**

**Documents brevets cités dans la description**

- US 2014334300 A1
- WO 05950 A
- WO 032750 A
- WO 021974 A
- WO 145382 A

**Littérature non-brevet citée dans la description**

- A Dataflow Model with Frequency Arithmetic.. **P. DUBRULLE** ; **C. GASTON** ; **N. KOSMATOV** ; **A. LAPITRE** ; **S. LOUISE**. 22nd International Conference on Fundamental Approaches to Software Engineering (FASE). Springer, 2019

- A Dataflow Model with Frequency Arithmetic.. **P. DUBRULLE** ; **C. GASTON** ; **N. KOSMATOV** ; **A. LAPITRE** ; **S. LOUISE**. 2nd International Conference on Fundamental Approaches to Software Engineering (FASE). Springer, 2019